# FASCICULE DE BREVET EUROPEEN

(11) **EP 1 026 815 B1**
(45) Date de publication et mention de la délivrance du brevet: **24.03.2004**
(21) Numéro de dépôt: 00490005.6
(22) Date de dépôt: 04.02.2000
(51) Int. Cl.: H02K 49/06

(54) **Dispositif magnétique pour l'accouplement rotatif de deux pièces dont une motrice et une réceptrice**
Drehkupplung für die magnetische Anordnung von zwei Bauteile, ein Kraftbauteil und ein Arbeitsbauteil
Magnetic device for the rotary coupling of two elements, from which one is driving and the other is receiving

(30) Priorité: 04.02.1999 FR 9901467
(43) Date de publication de la demande: 09.08.2000
(73) Titulaire: Mayr France S.A., 62160 Bully Les Mines (FR)
(72) Inventeur: Cauvin, Marc, 62760 Loos en Gohelle (FR); Desreumaux, Pascal, 62290 Noeux Les Mines (FR)
(74) Mandataire: Ecrepont, Robert

(56) Documents cités:
- DE-A- 3 732 766
- FR-A- 2 391 393
- FR-A- 2 683 405

## Description

L'invention se rapporte à la structure d'un dispositif magnétique pour l'accouplement rotatif de deux pièces dont une motrice et une réceptrice.

L'invention se rapporte plus particulièrement, mais non exclusivement à une structure pour un dispositif magnétique dans son application à la constitution d'un limiteur de couple.

Les dispositifs magnétiques d'accouplement rotatif sont des dispositifs qui permettent d'accoupler deux pièces en rotation, sans contact physique.

Il existe de nombreux dispositifs de ce type.

Les transmissions magnétiques connues peuvent être classées en trois grandes catégories :
- transmission synchrone ;
- transmission à hystérésis ;
- transmission par courants de Foucault.

Dans la transmission synchrone, on connaît des dispositifs à rotors extérieurs menant générateur de flux, à induction radiale. Ces dispositifs sont à décrochage permettant d'éviter par exemple une surcharge sur l'organe mené.

Dans la transmission à hystérésis, le rotor menant générateur de flux entraîne une bague en matériau ferromagnétique dur constituant le rotor mené. Ces dispositifs permettent une transmission synchrone tant que le couple résistant est inférieur à une certaine limite, mais le couple ne disparaît pas avec le décrochage mais est constant et indépendant de la vitesse, et l'appareil redémarre seul à la vitesse de synchronisme dès que le couple résistant est réduit. Ces dispositifs sont couramment employés sous la forme d'un système inducteur fixe (stator) et d'un anneau à hystérésis (rotor) comme freins produisant un couple résistant pratiquement indépendant de la vitesse.

Dans la transmission par courants de Foucault, le déplacement d'une plaque métallique dans un champ magnétique fixe présentant une composante normale à cette plaque fait apparaître un couple de freinage d'autant plus grand que cette vitesse est élevée (glissement).Ces dispositifs sont couramment employés pour le freinage et l'amortissement des oscillations et des rotations (watt-heuremètre, tachymètres par exemple).

Le document FR-A-2.391.393 décrit un dispositif mixte, comprenant un accouplement synchrone classique et une transmission par courants de Foucault.

L'invention se rapporte à un dispositif d'accouplement de type synchrone, avec décrochage formant limiteur de couple, dans lequel les courants de Foucault sont d'effets limités voire annulés.

Un résultat que l'invention vise à obtenir est un dispositif du type précité qui, tout en étant d'encombrement longitudinal et diamétral réduit, permet, d'une part, de transmettre un mouvement de rotation à une pièce réceptrice, et ce, jusqu'à un couple élevé précisément déterminé et, d'autre part, au delà de ce couple, libère cette pièce sans lui imposer de mouvement rotatif notable dû à l'inertie d'un de ces éléments constitutifs.

A cet effet, l'invention a pour objet une structure de dispositif magnétique d'accouplement rotatif selon la revendication 1, ce dispositif comprenant :
- une pièce première présentant une paroi tubulaire cylindrique de révolution qui :
   . dans l'alésage défini par la face interne de ladite paroi tubulaire porte axialement un arbre supportant un moyen de guidage en rotation et d'immobilisation en translation pour une pièce comportant une paroi tubulaire engagée dans l'alésage et autour dudit moyen de guidage en rotation et d'immobilisation en translation et,
   . abrite un anneau de matériau à propriétés magnétiques qui présente une face cylindrique autour et à distance déterminée de l'arbre central,
- une pièce deuxième qui, ayant une paroi tubulaire, constitue la pièce engagée dans la pièce première :
   . porte une couronne de matériau à propriétés magnétiques qui présente une face cylindrique en vis à vis de celle de l'anneau porté par la pièce première et,
   . présente une portée destinée à coopérer avec le moyen de guidage en rotation et d'immobilisation en translation.

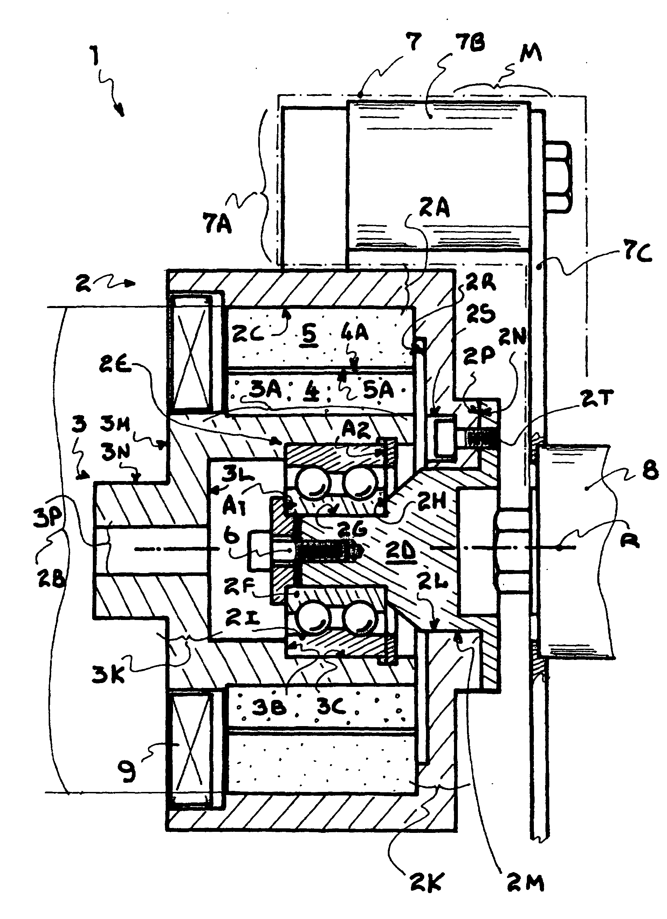

L'invention sera bien comprise à la lecture de la description ci-après faite à titre d'exemple non limitatif, en regard du dessin ci-annexé qui représente le dispositif de l'invention vu en coupe longitudinale.

En se reportant au dessin, on voit un dispositif 1 magnétique pour l'accouplement rotatif de deux pièces 2, 3 dont une pièce motrice et une pièce réceptrice.

Le dispositif 1 met en oeuvre deux éléments d'accouplement 4, 5 dont un élément aimanté 4 et un élément magnétiquement conducteur 5.

Ces éléments 4, 5 sont chacun associés à l'une des pièces motrices et réceptrices 2, 3 et présentent des faces 4A, 5A de révolution situées en vis à vis.

Le dispositif 1 comprend :
- une pièce première 2 présentant une paroi tubulaire 2A cylindrique de révolution qui :
   . dans l'alésage 2B défini par la face interne 2C de ladite paroi tubulaire 2A porte axialement un arbre 2D supportant un moyen 2E de guidage en rotation et d'immobilisation en translation pour une pièce 3 comportant une paroi 3A tubulaire engagée dans l'alésage 2B et autour dudit moyen 2E de guidage en rotation et d'immobilisation en translation et,
   . abrite un anneau 5 de matériau à propriétés magnétiques qui présente une face cylindrique 5A autour et à distance déterminée de l'arbre central 2D,
- une pièce deuxième 3 qui, ayant une paroi 3A tubulaire et constituant la pièce 3 engagée dans la pièce première 2 :
   . porte une couronne 4 de matériau à propriétés magnétiques qui présente une face cylindrique 4A en vis à vis de celle 5A de l'anneau porté par la pièce première 2 et,
   . présente une portée 3B, 3C destinée à coopérer avec le moyen 2E de guidage en rotation et d'immobilisation en translation.

La construction d'un dispositif d'accouplement selon cette structure permet de réduire l'inertie du dispositif en limitant l'encombrement longitudinal et diamétral de ce dispositif.

En effet, sur le dessin, on constate que la dimension longitudinale du dispositif est pratiquement limitée à la longueur de la pièce première.

L'une des extrémités de la pièce première 2 est fermée par une paroi 2K qui, dite transversale, d'une part, s'étend dans un plan approximativement orthogonal à l'axe de révolution R de la pièce première 2 et, d'autre part, porte l'arbre central 2D.

Dans un mode de réalisation, l'anneau 5 de matériau à propriétés magnétiques porté par la pièce première 2 est un anneau de matériau à hystérésis.

Le matériau magnétique à hystérésis est, par exemple, de l'ALNICO.

Dans ce mode de réalisation, pour certaines vitesses relatives entre élément aimanté 4 et anneau à hystérésis 5, des courants de Foucault se développent dans l'anneau à hystérésis 5, provoquant une montée en couple.

Pour limiter cette montée de couple, l'anneau à hystérésis est tranché en tronçons, par exemple, en trois ou quatre tronçons.

Par cette mesure, les effets des courants de Foucault peuvent être réduits voire supprimés.

Dans certains modes de réalisation, la couronne 4 de matériau à propriétés magnétiques portée par la pièce deuxième 3 consiste en une couronne d'aimants, par exemple, à base de terres rares, notamment samarium-cobalt, néodyme-fer-bore.

La pièce première 2 est en matériau amagnétique, tel un alliage d'aluminium.

L'arbre central 2D qui, lié à la pièce première 2, supporte la pièce deuxième 3 par le biais du moyen 2E de guidage en rotation et d'immobilisation en translation, consiste en une pièce 2D qui, distincte de la pièce première 2, est rapportée et immobilisée tant en translation qu'en rotation, dans une découpe 2L réalisée dans la paroi transversale 2K.

Le respect de ces caractéristiques techniques permet d'utiliser un matériau magnétiquement conducteur et précisément de l'acier, pour construire l'arbre central 2D qui supporte le moyen de guidage en rotation et d'immobilisation en rotation 2E.

La possible utilisation d'un acier, donc d'un matériau mécaniquement résistant, pour la construction de l'arbre central 2D favorise la réduction de la section transversale du dispositif.

L'utilisation d'acier pour la construction de l'arbre central 2D, permet de réaliser un dispositif de résistance et de compacité accrues sans remettre en question la discontinuité magnétique nécessaire au fonctionnement du dispositif.

Selon l'invention, le moyen 2E de guidage en rotation et d'immobilisation en translation comprend un roulement 2E dont la bague interne 2F coopère avec des portées 2G, 2H, A1 qui, solidaires de l'arbre central 2D, sont disposées pour assurer le centrage et l'immobilisation en translation de cette bague interne 2F, tandis que la bague externe 2I coopère avec des portées 3B, 3C, A2 qui, solidaires de la pièce deuxième 3, sont disposées pour assurer le centrage et l'immobilisation en translation de cette bague externe 2I.

Le centrage et l'immobilisation précitées sont définis par rapport à l'axe R de rotation du dispositif.

Dans la réalisation représentée, le moyen 2E de guidage en rotation et d'immobilisation en translation consiste en un roulement à billes de type à deux rangées de billes.

L'arbre central 2D, outre les portées 2G, 2H, A1 d'appui du moyen de guidage 2E, présente deux portées 2N, 2M dont, d'une part, une 2M de centrage dans l'alésage 2L de la paroi transversale 2K de la pièce première 2 et, d'autre part, une 2N d'appui contre une face 2P externe à l'alésage 2B de cette paroi 2K.

La paroi transversale 2K présente, aménagée dans une face 2R interne à l'alésage 2B, au moins une cavité 2S conformée pour le logement et l'appui de la tête ainsi que le passage du corps d'un élément 2T d'assemblage ancré dans une partie de la pièce troisième 2D, qui trouve appui contre celle externe 2N des faces 2R, 2N de-la paroi 2K transversale à l'alésage 2B.

Cette technique de construction permet que les éléments d'ancrage 2T, tels des vis, trouvent ancrage dans une pièce mécaniquement très résistante que constitue l'arbre central 2D.

Par ailleurs, le démontage des organes d'ancrage 2T est impossible depuis l'extérieur du dispositif.

Pour assurer l'immobilisation en translation du moyen 2E de guidage en rotation, l'arbre central 2D présente deux portées 2H, A1 qui sont opposées de manière à permettre le pincement dudit moyen 2E de guidage en rotation, lesquelles portées sont :
- l'une 2H, fixe, située vers l'extrémité de l'arbre central 2D qui est associée à la paroi transversale 2K de la pièce première 2 et,
- l'autre A1, démontable, située à l'extrémité opposée de l'arbre central 2D et retenue en cette position par un élément démontable 6.

La pièce deuxième 3 est équipée d'une paroi 3K qui, dite transversale, présente :
. une face 3L, dite interne, située en vis à vis de l'élément démontable 6,
. une face opposée 3M, dite externe qui présente une portée 3N d'accouplement en rotation avec un élément rotatif externe au dispositif,
. une découpe 3P qui s'étend entre les deux faces opposées 3L, 3M et présente une section suffisante pour l'actionnement de l'élément démontable 6.

La portée démontable A1 est avantageusement constituée par l'une des faces d'une rondelle.

La portée 3M d'accouplement en rotation permet d'entraîner un élément rotatif récepteur, lorsque la pièce première reçoit un mouvement moteur et que l'accouplement magnétique entre ladite pièce première et la pièce deuxième transmet le couple résistant opposé par l'élément externe en prise avec la pièce deuxième.

La pièce première porte également un moyen d'accouplement M en rotation avec un élément rotatif externe au dispositif.

Dans un type de mise en oeuvre, c'est par une face cylindrique externe de sa paroi tubulaire que la pièce première porte un moyen 7 d'accouplement en rotation avec un élément rotatif externe au dispositif.

Par exemple, le moyen d'accouplement 7 comprend une pluralité d'oreilles 7A qui portent des coussinets 7B de liaison élastique avec un plateau 7C associé à un moyen d'entraînement 8 en rotation autour d'un axe sensiblement coaxial à l'axe R de rotation de la pièce première.

Pour assurer l'immobilisation en translation du moyen 2E de guidage en rotation, la pièce deuxième 3 présente deux portées 3B, A2 qui sont opposées de manière à permettre le pincement dudit moyen 2E de guidage en rotation, lesquelles portées sont :
. l'une A2, démontable, située au niveau d'une extrémité de la pièce deuxième 3 qui est voisine de la paroi transversale 2K de la pièce première 2 et,
. l'autre 3B, fixe, constituée par une face 3B délimitant longitudianlement une portée 3C de centrage du moyen 2E de guidage en rotation à l'intérieur de la pièce deuxième.

Par exemple, la portée démontable est constituée par un anneau élastique.

L'espace qui subsiste dans le plan transversal extrême de la pièce première 2 opposé à celui dans lequel s'étend la paroi transversale 2K, est fermé par un moyen d'étanchéité 9 traversé par la pièce deuxième 3.

Dans certains modes de réalisation (non représentés), le dispositif d'accouplement 1 est réglable par le biais :
- d'ajouts ou de retraits de modules d'aimants et/ou de matière à hystérésis dans la couronne 4 et l'anneau 5,
- d'une modification de la longueur des recouvrement des aimants.

## Revendications

1. Dispositif pour l'accouplement magnétique rotatif synchrone avec décrochage, formant limiteur de couple, d'une première pièce (2) motrice à une deuxième pièce (3) réceptrice, la première pièce (2) présentant une paroi tubulaire (2A) cylindrique de révolution et portant axialement un arbre (2D) supportant un roulement (2E), la première pièce (2) abritant un anneau (5) de matériau à propriétés magnétiques dont une face cylindrique (5A) est placée autour et à distance prédéterminée de l'arbre (2D), l'anneau (5) étant tranché en tronçons de sorte à réduire les effets des courants de Foucault, la deuxième pièce (3) présentant une paroi tubulaire (3A), portant une couronne (4) de matériau à propriétés magnétiques dont une face cylindrique (4A) est en vis à vis de celle (5A) de l'anneau (5), la deuxième pièce (3) présentant une portée (3B, 3C) d'appui de la bague externe (21) du roulement (2E), l'arbre (2D) étant pourvu de portées (2G, 2H) d'appui de la bague interne (2F) du roulement (2E), cet arbre (2D) étant une pièce en acier rapportée et immobilisée en rotation et en translation dans une découpe (2L) réalisée dans la paroi transversale (2K) de la première pièce (2) en matériau amagnétique, tel un alliage d'aluminium.

2. Dispositif selon la revendication 1 **caractérisé en ce que** l'anneau (5) de matériau à propriétés magnétiques est un anneau de matériau à hystérésis, tel Al Ni Co.

3. Dispositif selon la revendication 1 ou 2 **caractérisé en ce que** la couronne (4) de matériau à propriétés magnétiques est une couronne d'aimants, tel qu'aimants terres rares samarium cobalt, neodyme-fer-bore.

4. Dispositif selon l'une quelconque des revendications 2 ou 3 **caractérisé en ce que** :
- l'arbre central (2D) qui, outre les portées (2G, 2H, A1) d'appui du roulement (2E), présente deux portées (2N, 2M) dont, d'une part, une (2M) de centrage dans l'alésage (2L) de la paroi transversale (2K) de la pièce première (2) et, d'autre part, une (2N) d'appui contre une face (2P) externe à l'alésage (2B) de cette paroi (2K),
- la paroi transversale (2K) présente, aménagée dans une face (2R) interne à l'alésage (2B), au moins une cavité (2S) conformée pour le logement et l'appui de la tête ainsi que le passage du corps d'un élément (2T) d'assemblage ancré dans une partie de la pièce troisième (2D), qui trouve appui contre celle externe (2N) des faces de la paroi (2K) transversale à l'alésage (2B).

5. Dispositif selon l'une quelconque des revendications 1 à 4 **caractérisé en ce que** :
- pour assurer l'immobilisation en translation du roulement (2E), l'arbre central (2D) présente deux portées (2H, A1) qui sont opposées de manière à permettre le pincement dudit roulement (2E), lesquelles portées sont :
. l'une (2H), fixe, située vers l'extrémité de l'arbre central (2D) qui est associée à la paroi transversale (2K) de la pièce première (2) et,
. l'autre (A1), démontable, située à l'extrémité opposée de l'arbre central (2D) et retenue en cette position par un élément démontable (6),
- la pièce deuxième (3) est équipée d'une paroi (3K) qui, dite transversale, présente :
. une face (3L), dite interne, située en vis à vis de l'élément démontable (6),
. une face opposée (3M), dite externe qui présente une portée (3N) d'accouplement en rotation avec un élément rotatif externe au dispositif,
. une découpe (3P) qui s'étend entre les deux faces opposées (3L, 3M) et présente une section suffisante pour l'actionnement de l'élément démontable (6).

6. Dispositif selon l'une quelconque des revendications 1 à 5 **caractérisé en ce que**, pour assurer l'immobilisation en translation du roulement (2E), la pièce deuxième (3) présente deux portées (3B, A2) qui sont opposées de manière à permettre le pincement dudit roulement (2E), lesquelles portées sont :
. l'une (A2), démontable, située au niveau d'une extrémité de la pièce deuxième (3) qui est voisine de la paroi transversale (2K) de la pièce première (2) et,
. l'autre (3B), fixe, constituée par une face (3B) délimitant longitudinalement une portée (3C) de centrage du roulement (2E) à l'intérieur de la pièce deuxième.

## Patentansprüche

1. Magnetische, einen Drehmomentbegrenzer bildende Einrichtung (1) zur rotierenden synchronen Verbindung mit Entkupplung eines ersten Antriebstückes (2) mit eine zweiten Aufnahmestück (3) wobei das erste Stück (2) eine zylindrische Umdrehungsrohrwand (2A) aufweist und axial eine ein rotierendes Lager abstützende Welle (2D) trägt, wobei das erste Stück (2) einen Ring (5) aus Material mit magnetischen Eigenschaften umfasst, dessen eine zylindrische Seite (5A) mit einem vorbestimmten Abstand um der Welle (2D) herum angeordnet ist, wobei dieser Ring (5) derart in Teilabschnitten unterteilt ist, dass er die Effekte der Foucault-Ströme vermindert, wobei das zweite Stück (3) eine Rohrwand aufweist (3A), welche einen Kranz (4) aus Material mit magnetischen Eigenschaften trägt, dessen eine zylindrische Seite (4A) dieser (5A) des Rings (5) gegenüberliegt, wobei das zweite Stück (3) eine Auflagefläche (3B, 3C) für den Außenring (21) des Lagers (2E) aufweist, wobei die Welle (2D) mit Auflageflächen (2G, 2H) für den Innenring ( 2F) des Lagers (2E) versehen ist, und diese Welle ein aufgesetztes, in einem in der Querwand (2K) des ersten Stücks aus nichtmagnetischem Material, wie zum Beispiel aus einer Aluminiumlegierung vorgesehenen Ausschnitt in Drehung und in Translation gesperrtes Stahlstück ist.

2. Einrichtung nach Anspruch 1, **dadurch gekennzeichnet, daß** der Ring (5) aus Material mit magnetischen Eigenschaften ein Ring aus Hysteresematerial ist, wie Al Ni Co.

3. Einrichtung nach Anspruch 1 oder 2, **dadurch gekennzeichnet, daß** der Kranz (4) aus Material mit magnetischen Eigenschaften ein Magnetenkranz ist, mit Magneten wie zum Beispiel auf Basis von seltenen Erden, insbesondere Kobalt-Samarium, Eisenbor-Neodym.

4. Einrichtung nach Anspruch 2 oder 3, **dadurch gekennzeichnet, daß** :
- die zentrale Welle (2D), neben den Auflageflächen (2G, 2H, A1) für das Lager (2E) zwei Auflageflächen (2N, 2M) aufweist, davon einerseits eine Zentrierungsfläche (2M) in der Bohrung (2L) der Querwand (2K) des ersten Stücks (2) und andererseits eine Abstützfläche (2N) gegen eine Seite (2P), die außerhalb der in dieser Wand (2K) vorgesehenen Bohrung (2B) liegt.
- die Querwand (2K) mindestens einen in einer innerhalb der Bohrung (2B) gelegenen Seite (2R) vorgesehenen Hohlraum (2S) aufweist, der zur Aufnahme und zur Abstützung des Kopfes, sowie für den Durchgang des Körpers eines Verbindungselements (2T) ausgestaltet ist, das in einem Teil des dritten Stücks (2D) verankert ist, welches sich gegen den äußeren Teil (2N) der in bezug auf die Bohrung querverlaufenden Wandseite (2K) abstützt.

5. Einrichtung nach Anspruch 1 bis 4, **dadurch gekennzeichnet, daß**
- um die Unbeweglichkeit des Lagers (2E) in Translation zu gewährleisten, die Zentralwelle (2 D) mit zwei Auflageflächen (2H, A1) versehen ist, die um ein Einklemmen des genannten Lagers (2E) zur ermöglichen zueinander entgegengesetzt sind und wovon
* die eine (2H), feststehend ist und am Endteil der Zentralwelle (2D) liegt, das der Querwand (2K) des erstens Stücks (2) zugeordnet ist und,
* die andere (2A1) abnehmbar ist, und am entgegengesetzten Endteil der Zentralwelle (2D) liegt und in dieser Stellung von einem abnehmbaren Element (6) befestigt ist
- das zweite Stück (3) mit einer als Querwand bezeichnetet Wand (3K) versehen ist, die
* eine sogenannte Innenseite (3L), die gegenüber dem abnehmbaren Elementen (6) liegt,
* eine entgegengesetzte sogenannte Außenseite (3P), welche eine Auflagefläche für die drehenden Verkupplung mit einem der Einrichtung außenliegenden Elementen aufweist,
* einen sich zwischen den zwei gegenüberliegenden Seiten ( 3L, 3M) und einen für die Betätigung des abnehmbaren Elements genügenden Querschnitt aufweisenden Ausschnitt aufweist.

6. Einrichtung nach Anspruch 1 bis 5, **dadurch gekennzeichnet, daß**, um die Unbeweglichkeit des Lagers (2E) in Translation zu gewährleisten, das zweite Stück (3) mit zwei Auflageflächen (3B, A2) versehen ist, die um ein Einklemmen des genannten Lagers (2E) zur ermöglichen zueinander entgegengesetzt sind und wovon
* die eine (A2) abnehmbar ist, und am Endteil des zweiten Stücks (3) liegt, die der Querwand (2K) des ersten Stücks benachbart ist und
* die andere (3) feststehend ist und aus einer Seite (3B) besteht, welche längsseitig eine Auflagefläche (3), zur Lagenzentrierung (2E) innerhalb des zweiten Stücks begrenzt.

## Claims

1. Device for synchronous rotary magnetic coupling with releasing, forming a torque limiter, of a first driving part (2) to a second receiving part (3), the first part (2) having a revolving cylindrical tubular wall (2A) and axially carrying a shaft (2D) supporting a bearing (2E), the first part (2) housing a ring (5) made from material with magnetic properties, one cylindrical face (5A) of which is placed around and at a predetermined distance from the shaft (2D), the ring (5) being cut into portions so as to reduce the effects of eddy currents, the second part (3) having a tubular wall (3A) carrying a crown (4) made from a material with magnetic properties, one cylindrical face (4A) of which is opposite that (5A) of the ring (5), the second part (3) having a bearing face (3B, 3C) supporting the outer bush (2I) of the bearing (2E), the shaft (2D) being provided with bearing faces (2G, 2H) supporting the inner bush (2F) of the bearing (2E), this shaft (2D) being a steel component inset and immobilised as it turns and moves linearly in a cut-out (2L) made in the transverse wall (2K) of the first part (2) in an amagnetic material, such as an aluminium alloy.

2. Device according to Claim 1, **characterised in that** the ring (5) made from material with magnetic properties is a ring from hysteresis material such as AlNiCo.

3. Device according to Claim 1 or 2, **characterised in that** the crown (4) from material with magnetic properties is a crown with magnets such as rare earth samarium cobalt, neodymium-iron-boron magnets.

4. Device according to any one of the Claims 2 or 3, **characterised in that**:
- the centre shaft (2D) which, in addition to the bearing faces (2G, 2H, A1) supporting the bearing (2E), has two bearing faces (2N, 2M), one of them (2M), on the one hand, for centering the first part (2) in the bore (2L) of the transverse wall (2K) and one of them (2N) for supporting this wall (2K) against a face (2P) outside the bore (2B).
- the transverse wall (2K) has, arranged in a face (2R) inside the bore (2B), at least one cavity (2S) shaped for housing and supporting the head as well as for passing through the body of an assembling part (2T) anchored in a section of the third part (2D), which is supported against the outer one (2N) of the faces of the transverse wall (2K) at the bore (2B).

5. Device according to any one of the Claims 1 to 4, **characterised in that**:
- to ensure immobilisation of the bearing (2E) in linear movement, the centre shaft (2D) has two bearing faces (2H, A1) which are opposite so as to allow the said bearing (2E) to be gripped, these bearing faces being:
- one (2H), fixed, located towards the end of the centre shaft (2D) which is associated with the transverse wall (2K) of the first part (2), and
- the other (A1), removable, located at the opposite end of the centre shaft (2D) and kept in this position by a removable part (6),
- the second part (3) is complete with a wall (3K), called transverse, has:
- a face (3L), called inner, located opposite the removable part (6),
- an opposite face (3M), called outer, which has a bearing face (3N) for coupling in rotation with a rotary part outside the device,
- a cut-out (3P) which extends between the two opposite faces (3L, 3M) and has a section sufficient for operation of the removable part (6).

6. Device according to any one of the claims 1 to 5, **characterised in that**, in order to ensure immobilisation in linear movement of the bearing (2E), the second pat (3) has two bearing faces (3B, A2) which are opposite so as to allow the said bearing (2E) to be gripped, and these bearing faces are:
- one (A2), removable, located at the level of one end of the second part (3) which is adjacent to the transverse wall (2K) of the first part (2), and
- the other (3B), fixed, made up of one face (3B) delineating longitudinally a bearing face (3C) for centering the bearing (2E) inside the second part.
